# EUROPEAN PATENT APPLICATION

(11) **EP 3 470 974 A1**
(43) Date of publication of application: **17.04.2019**
(21) Application number: 17306357.9
(22) Date of filing: 10.10.2017
(51) Int. Cl.: G06F 3/147, G09G 3/00

(54) **SELECTION OF ANIMATED VIEWING ANGLE IN AN IMMERSIVE VIRTUAL ENVIRONMENT**

(71) Applicant: Thomson Licensing, 92130 Issy-les-Moulineaux (FR)
(72) Inventor: THATTAMANGALAM-NARAYANAN, Krishnan, 600034 Chennai (IN); MANOHARAN, Raja Thanga Rathinam, 600100 Chennai (IN)
(74) Representative: Amor, Rim

(57) **Abstract**

A system and method is provided for receiving a video stream that has associated metadata and calculating via a processor an optimal viewing angle by analyzing the video stream content and associated metadata. The processor will then manipulate the video stream so that it can be displayed according to the optimal viewing angle.

## Description

### TECHNICAL FIELD

The present invention relates generally to immersive virtual environments and in particular, to techniques for selecting viewing angles in Virtual Reality (VR) or Augmented Reality (AR) environments.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Virtual reality (VR) and augmented reality (AR) provide immersive multimedia and computer-simulated reality. AR/VR applications can be used to simulates a user's physical presence in a virtual world that is partly real or completely imaginary. Because of the rich experiences that can be provided, VR and AR devices have gained immense popularity. This is because VR/AR can be used practically in every field to perform various functions including testing, entertaining and teaching. For example, engineers and architects can use VR/AR in modelling of new designs. Doctors can use VR/AR technologies to practice and perfect difficult operations ahead of time and military experts can develop strategies by simulating battlefield operations. VR/AR is also used extensively in the gaming and entertainment industries to provide interactive experiences and enhance audience enjoyment.

While VR/AR applications offer unique experiences, unfortunately, there are many drawbacks in current prior art. One particular challenge, is the restrictions imposed by VR/AR user interfaces. Current VR/AR systems are limited and mostly provide solitary experiences due to these restrictions. Conventional wisdom dictates that the notion of a solitary user, is an undesired one. In addition, like all games and experiences, environments that are shared often provide best creative results. Consequently, multiplayer and multi-shared environments are desirable that can embrace a more social VR/AR world.

### SUMMARY

Additional features and advantages are realized through similar techniques and other embodiments and aspects are described in detail herein and are considered a part of the claimed invention. For a better understanding of the invention with advantages and features, refer to the description and to the drawings.

In one embodiment, a method is provided comprising receiving a video stream including associated metadata and calculating via a processor an optimal viewing angle by analyzing the video stream content and associated metadata. The processor will then manipulate the video stream so that it can be displayed according to the optimal viewing angle.

In another embodiment, a system is provided comprising a video processing unit for receiving a video stream and its associated metadata. The video processing unit is coupled to a processor configured to calculate an optimal viewing angle by analyzing video stream content and said associated metadata and for adjusting the video stream so that the video stream can be displayed based on the optimal viewing angle.

In yet another embodiment, a panoramic VR live video transmission is provided that receives a video stream and metadata and determines a favorite viewing angle according to previous user habits. The content specific information is also determined about video stream by analyzing associated metadata so that an optimal viewing angle can be calculated by correlating said content specific information with said user favorite viewing angle.

In yet another embodiment, a video stream is received at a playback device. It then analyzes identifying information relating to said video stream to determine if the video stream includes a 360 video descriptor. A preferred angle of viewing is then determined relating to the video stream when determined the video stream has a 360 video descriptor and ultimately the video stream is displayed based on preferred angle of viewing.

### BRIEF DESCRIPTION OF THE DRAWINGS

The present disclosure will be better understood and illustrated by means of the following embodiment and execution examples, in no way limitative, with reference to the appended figures on which:
Figure 1 schematically represents an immersive video rendering device according to an embodiment;
Figure 2 is a block diagram illustrating a Head Mounted Display device as used in AR/VR devices;
Figure 3 schematically represents a functional overview of an encoding and decoding system according one or more embodiments of the disclosure;
Figure 4 schematically represents a system, according to one embodiment;
Figure schematically represents a system, according to another embodiment;
Figure 5 schematically represents a system, according to another embodiment;

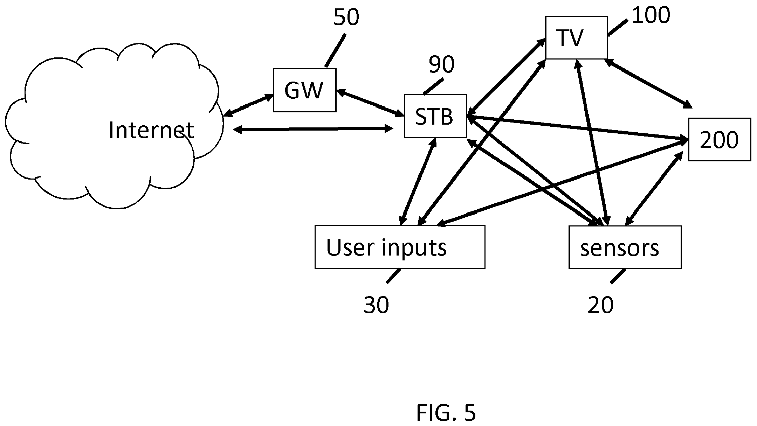

Figure 5 schematically represents a system, according to another embodiment;

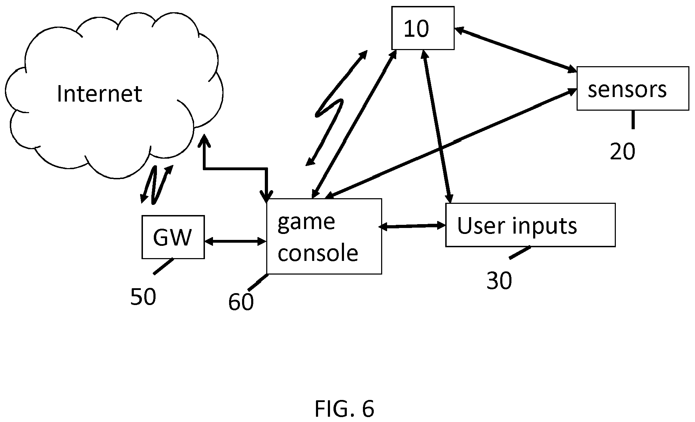

Figure 6 schematically represents a system, according to another embodiment;

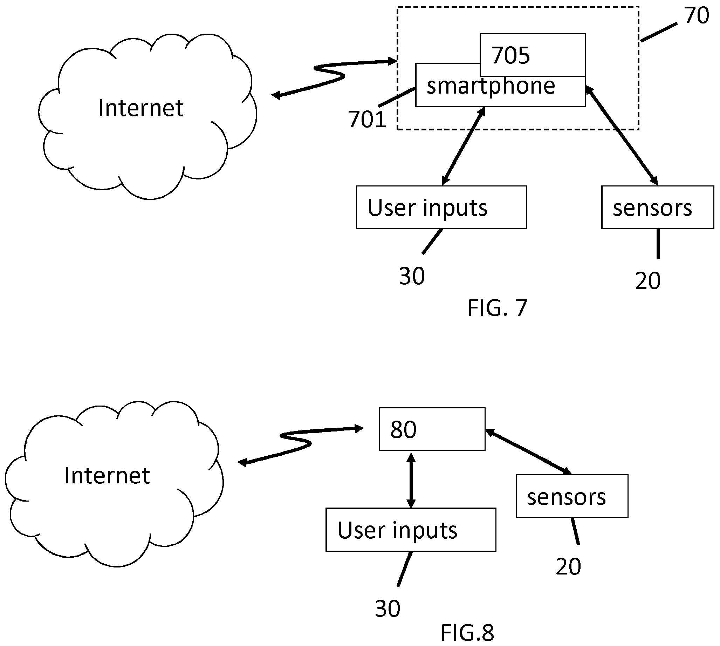

Figure 7 schematically represents a system, according to another embodiment;
Figure 8 schematically represents a system according to another embodiment;

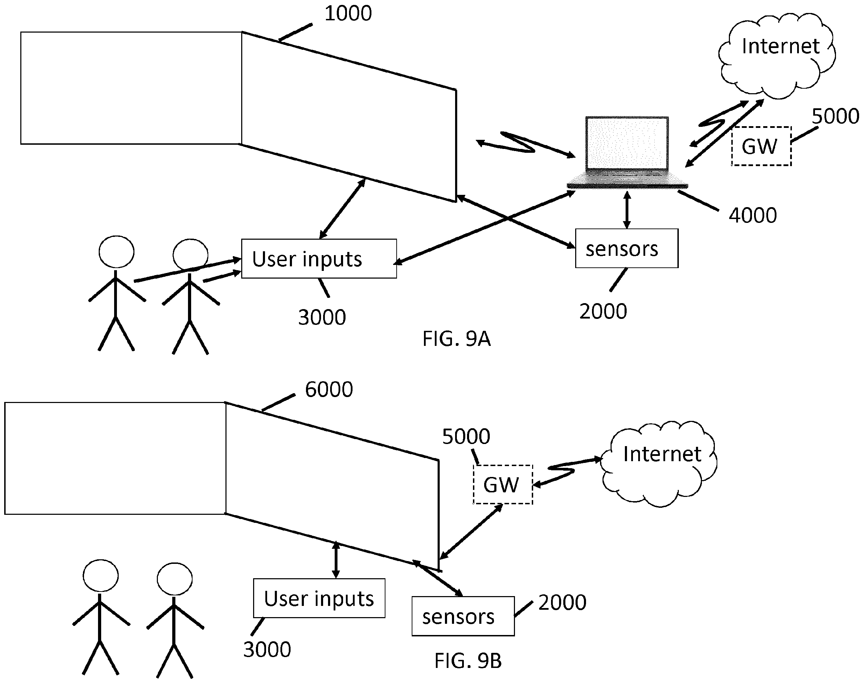

Figure 9A and 9B schematically represents a system according to different alternative embodiments;

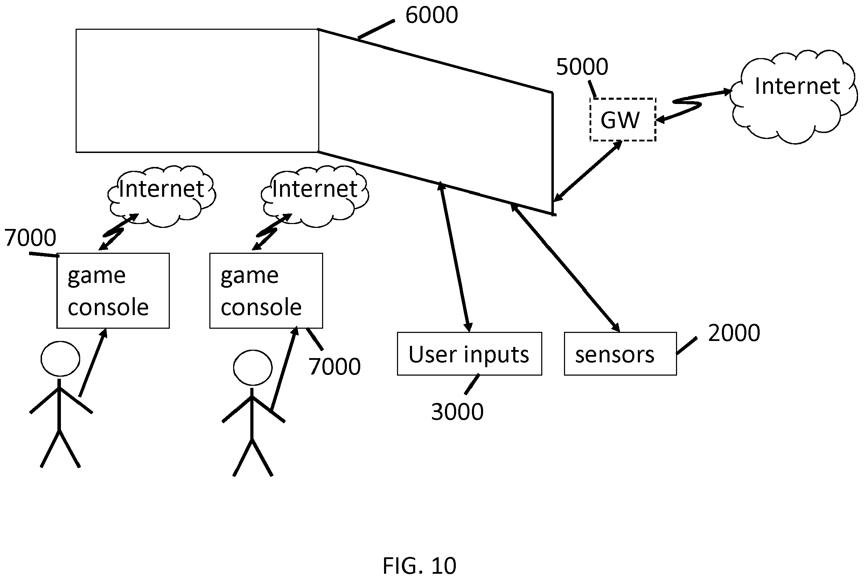

Figures 10 is an example of a system such as one used for gaming according to one embodiment;

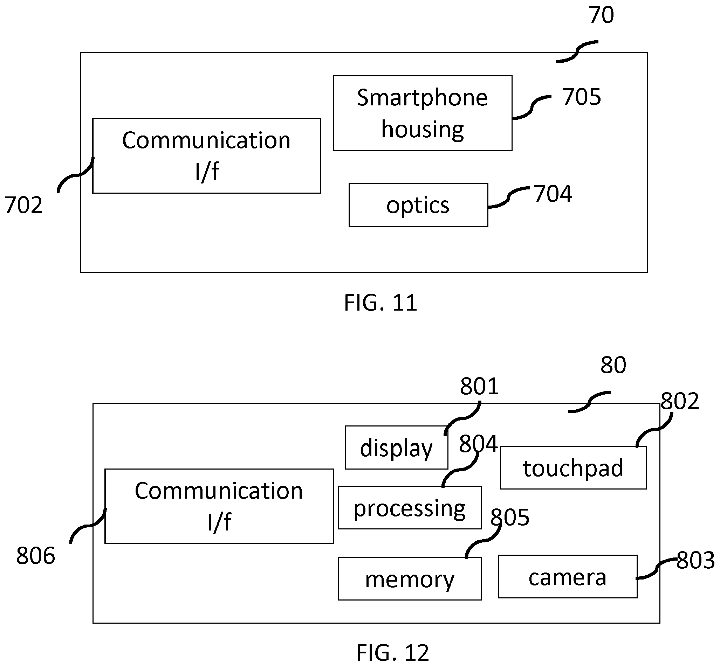

Figure 11 schematically represents an immersive video rendering device according to another embodiment;
Figure 12 schematically represents an immersive video rendering device according to another embodiment;

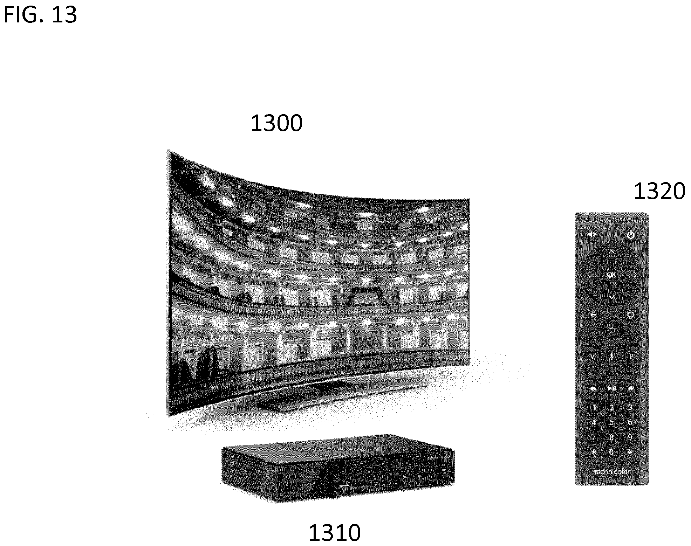

Figure 13 illustrates a rendering devices with several components used as way of example according to one embodiment;

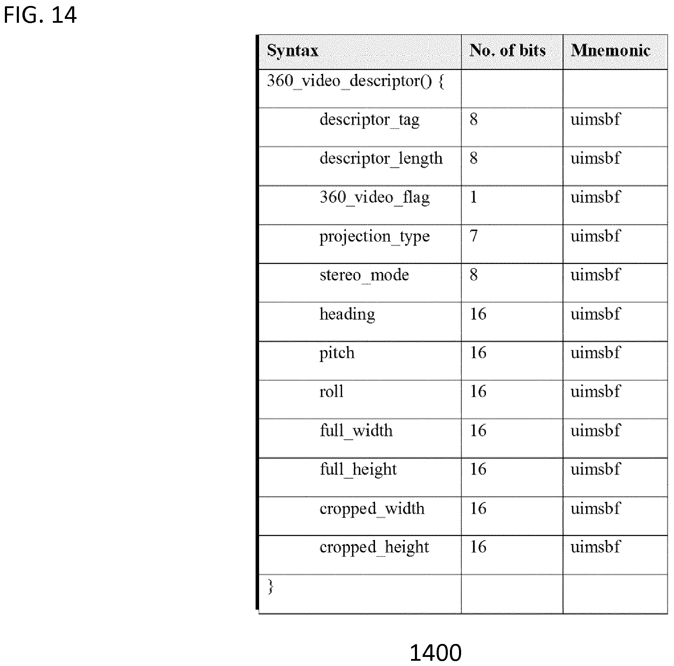

Figure 14 is an illustration of an exemplary chart showing some semantic video stream descriptors;

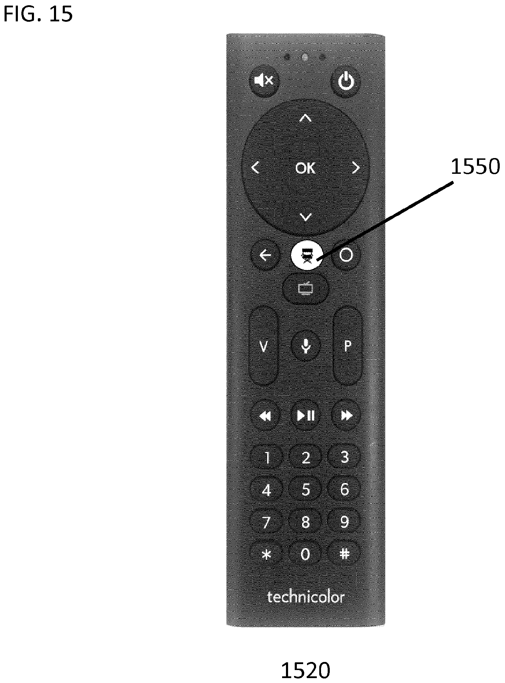

Figure 15 is an illustration of an exemplary remote according to one embodiment;

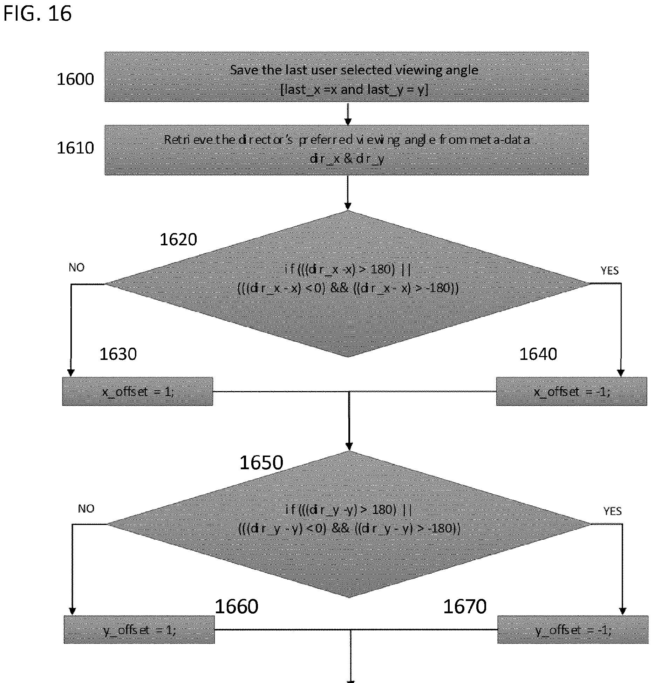

Figure 16 is a flow chart illustration for a methodology that provides a selective viewing angle according to one embodiment;

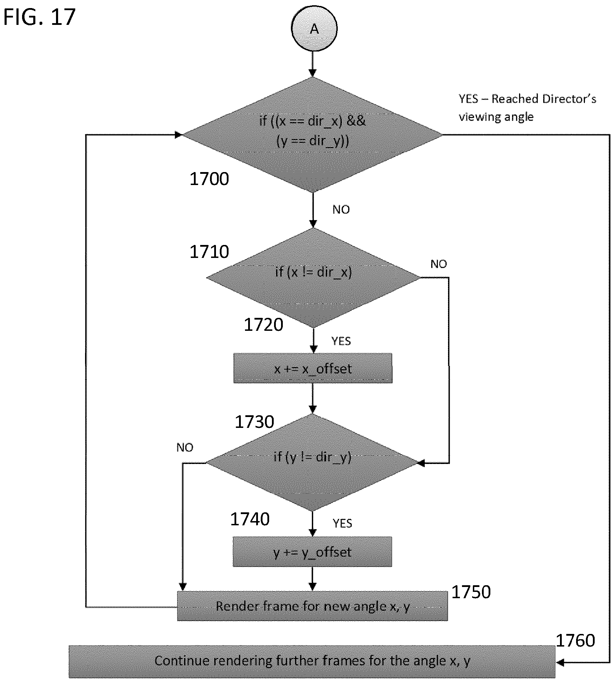

Figure 17 is a flow chart representation of a methodology for providing selective viewing angles using an alternate set of commands according to one embodiment; and

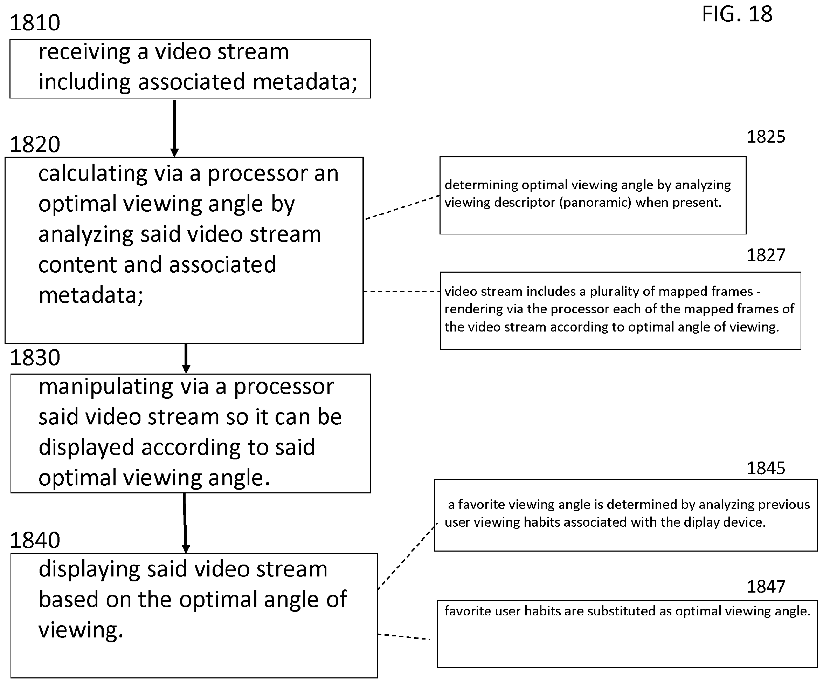

Figure 18 is a flowchart illustration of a methodology for establishing an optimal viewing angle according to one embodiment.

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

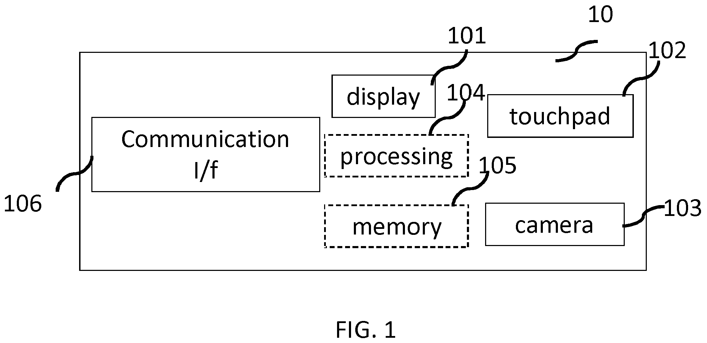

Figure 1 schematically represents an immersive video rendering device according to an embodiment as will be discussed in detail comprising several components only used as way of example. These components are only provided for clarity, with the understanding that in alternate embodiments these components may be modified, substituted, added and/or removed to selectively address certain needs. However, before analyzing these components more, some understanding of user interfaces for VR/AR system including Head Mounted User Interfaces should be reviewed.

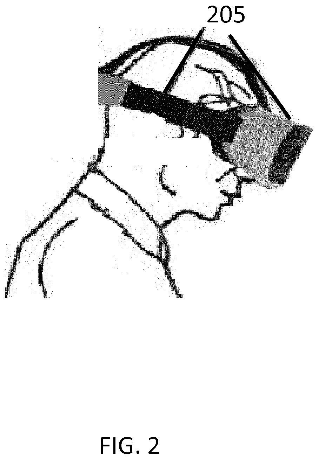

Figure 2 illustrates a Head Mounted Display (HMD) and user interface referenced by numerals 205 such as used in most Virtual Reality (VR) and Augmented Reality (AR) environments. HMD displays are part of some of the most popular user interface devices utilized in conjunction with immersive environments such as AR/VR. In most HMDs, the end user while wearing the HMD can turn around his head and the view is updated accordingly in the HMD. HMDs act as both input and output device where the head movement orientation is received as input and the content rendered by a host computer is displayed on the HMD. However, this leads to several challenges. One challenge is that such devices provide an often solitary experience for the user. Another challenge is that most HMDs can only be used comfortably for a short time. In addition, most HMDs require a complicated setup and need to be incorporated only with powerful computing units.

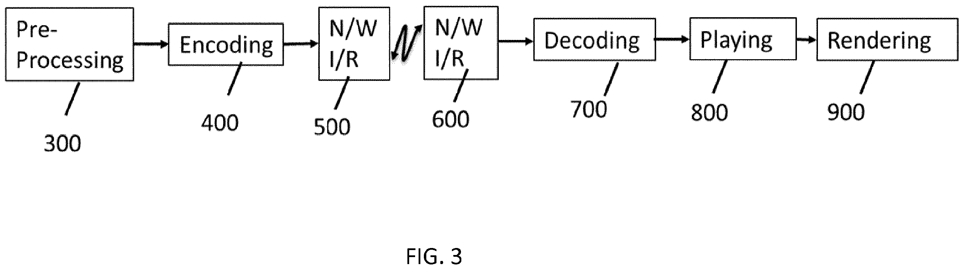

Figure 3 schematically illustrates a general overview of an encoding and decoding system according to one or more embodiments. The system of Figure 3 is configured to perform one or more functions of the system of Figure 1 as will be discussed in conjunction with one another. A pre-processing module 300 may be provided to prepare the content for encoding by an encoding device 400. The pre-processing module 300 may perform multi-image acquisition, merging of the acquired multiple images in a common space (typically a 3D sphere if directions are encoded), and mapping of the 3D sphere into a 2D frame using, for example, but not limited to, an equirectangular mapping or a cube mapping. The pre-processing module 300 may also acquire an omnidirectional video in a particular format (for example, equi-rectangular) as input, and pre-process the video to change the mapping into a format more suitable for encoding. Depending on the acquired video data representation, the pre-processing module 300 may perform a mapping space change. After being encoded, the data, which may be encoded immersive video data or 3D CGI encoded data for instance, are sent to a network interface 500, which may be typically implemented in any network interface, for instance present in a gateway. The data are then transmitted through a communication network, such as internet but any other network may be foreseen. Then the data are received via network interface 600. Network interface 600 may be implemented in a gateway, in a television, in a set-top box, in a head mounted display device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

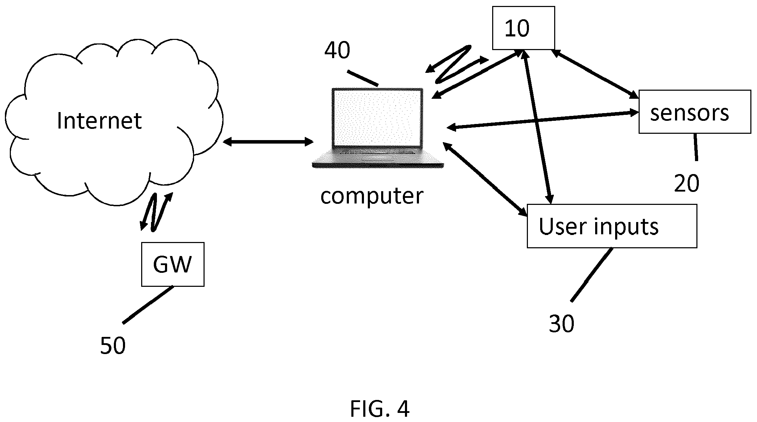

Various types of systems may be used to perform functions of an immersive display device, for rendering an immersive video for example decoding, playing and rendering. Embodiments of a system, for processing augmented reality (AR) or virtual reality (VR) content are illustrated in figures 4 to 12. Such systems are provided with one or more processing functions, and include an immersive video rendering device which may be a head-mounted display (HMD), a tablet or a smartphone for example, and optionally include one or sensors. The immersive video rendering device may also include interface modules between the display device and one or more modules performing the processing functions. The processing functions maybe integrated into the immersive video rendering device or performed by one or more processing devices. Such a processing device may include one or more processors and a communication interface with the immersive video rendering device, such as a wireless or wired communication interface.

The processing device may also include a communication interface with a wide access network such as internet and access content located on a cloud, directly or through a network device such as a home or a local gateway. The processing device may also access a local storage device through an interface such as a local access network interface, for example an Ethernet type interface. In an embodiment, the processing device may be provided in a computer system having one or more processing units. In another embodiment, the processing device may be provided in a smartphone which can be connected by a wired link or a wireless link to the video to change the mapping into a format more suitable for encoding. Depending on the acquired video data representation, the pre-processing module 300 may perform a mapping space change. After being encoded, the data, which may be encoded immersive video data or 3D CGI encoded data for instance, are sent to a network interface 500, which may be typically implemented in any network interface, for instance present in a gateway. The data are then transmitted through a communication network, such as internet but any other network may be foreseen. Then the data are received via network interface 600. Network interface 600 may be implemented in a gateway, in a television, in a set-top box, in a head mounted display device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

An immersive content typically refers to a video or other streamed content or images, potentially encoded on a rectangular frame that is a two-dimension array of pixels (i.e. element of color information) like a "regular" video or other form of image content. In many implementations, the following processes may be performed. To be rendered, the frame is, first, mapped on the inner face of a convex volume, also referred to as mapping surface (e.g. a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, various mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. There is a lack of taking specificities of immersive videos into account in encoding and decoding methods. Indeed, as immersive videos are 360° videos, a panning, for example, introduces motion and discontinuities that require a large amount of data to be encoded while the content of the scene does not change. Taking immersive videos specificities into account while encoding and decoding video frames would bring valuable advantages to the state-of-art methods.

In another embodiment, the system includes an auxiliary device which communicates with the immersive video rendering device and with the processing device. In such an embodiment, the auxiliary device may perform at least one of the processing functions. The immersive video rendering device may include one or more displays. The device may employ optics such as lenses in front of each display. The display may also be a part of the immersive display device such as for example in the case of smartphones or tablets. In another embodiment, displays and optics may be embedded in a helmet, in glasses, or in a wearable visor. The immersive video rendering device may also include one or more sensors, as described later. The immersive video rendering device may also include interfaces or connectors. It may include one or more wireless modules in order to communicate with sensors, processing functions, handheld or devices or sensors related to other body parts.

When the processing functions are performed by the immersive video rendering device, the immersive video rendering device can be provided with an interface to a network directly or through a gateway to receive and/or transmit content.

The immersive video rendering device may also include processing functions executed by one or more processors and configured to decode content or to process content. By processing content here, it is understood functions for preparing content for display. This may include, for instance, decoding content, merging content before displaying it and modifying the content according to the display device.

One function of an immersive content rendering device is to control a virtual camera which captures at least a part of the content structured as a virtual volume. The system may include one or more pose tracking sensors which totally or partially track the user's pose, for example, the pose of the user's head, in order to process the pose of the virtual camera. One or more positioning sensors may be provided to track the displacement of the user. The system may also include other sensors related to the environment for example to measure lighting, temperature or sound conditions. Such sensors may also be related to the body of a user, for instance, to detect or measure sweating or heart rate. Information acquired through these sensors may be used to process the content. The system may also include user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Referring back to Figure 3, an embodiment of the immersive video rendering device 10, will now be described in more detail with reference to Figure 1. The immersive video rendering device includes a display 101. The display is, for example an OLED or LCD type display. The immersive video rendering device 10 is, for instance a HMD, a tablet or a smartphone. The device 10 may include a touch sensitive surface 102 (e.g. a touchpad or a tactile screen), a camera 103, a memory 105 in connection with at least one processor 104 and at least one communication interface 106. The at least one processor 104 processes the signals received from the sensor(s) 20. Some of the measurements from sensors are used to compute the pose of the device and to control the virtual camera. Sensors which may be used for pose estimation include, for instance, gyroscopes, accelerometers or compasses. In more complex systems, a rig of cameras for example may also be used. The at least one processor 104 performs image processing to estimate the pose of the device 10. Some other measurements may be used to process the content according to environmental conditions or user reactions. Sensors used for detecting environment and user conditions include, for instance, one or more microphones, light sensor or contact sensors. More complex systems may also be used such as, for example, a video camera tracking eyes of a user. In such a case the at least one processor performs image processing to perform the expected measurement. Data from sensor(s) 20 and user input device(s) 30 may also be transmitted to the computer 40 which will process the data according to the input of the sensors.

Memory 105 includes parameters and code program instructions for the processor 104. Memory 105 may also include parameters received from the sensor(s) 20 and user input device(s) 30. Communication interface 106 enables the immersive video rendering device to communicate with the computer 40. The Communication interface 106 of the processing device may include a wireline interface (for example a bus interface, a wide area network interface, a local area network interface) or a wireless interface (such as a IEEE 802.11 interface or a Bluetooth® interface). Computer 40 sends data and optionally control commands to the immersive video rendering device 10. The computer 40 processes the data, for example to prepare the data for display by the immersive video rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example. decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

Embodiments of a first type of system for displaying augmented reality, virtual reality, augmented virtuality or any content from augmented reality to virtual reality will be described with reference to Figures 2 to 6. In one embodiment, these are combined with a large field-of-view content that can provide a 360 degree view of a real, fictional or mixed environment. This large field-of-view content may be, among others, a three-dimension computer graphic imagery scene (3D CGI scene), a point cloud, streaming content or an immersive video or panoramic picture or images. Many terms may be used to define technology that provides such content or videos such as for example Virtual Reality (VR), Augmented Reality (AR) 360, panoramic, 4π, steradians, omnidirectional, immersive and alongside large-field- of-view as previously indicated.

Figure 4 schematically illustrates an embodiment of a system configured to decode, process and render immersive videos. The system includes an immersive video rendering device 10, one or sensors 20, one or more user input devices 30, a computer 40 and a gateway 50 (optional).

Figure 5 schematically represents a second embodiment of a system configured to decode, process and render immersive videos. In this embodiment, a STB 90 is connected to a network such as internet directly (i.e. the STB 90 includes a network interface) or via a gateway 50. The STB 90 is connected through a wireless interface or through a wired interface to a rendering device such as a television set 100 or an immersive video rendering device 200. In addition to classic functions of a STB, STB 90 includes processing functions to process video content for rendering on the television 100 or on any immersive video rendering device 200. These processing functions are similar to the processing functions described for computer 40 and are not described again here. Sensor(s) 20 and user input device(s) 30 are also of the same type as the sensor(s) and input device(s) described earlier with reference to Figure 2. The STB 90 obtains the data representative of the immersive video from the internet. In another embodiment, the STB 90 obtains the data representative of the immersive video from a local storage (not represented) where the data representative of the immersive video are stored.

Figure 6 schematically represents a third embodiment of a system configured to decode, process and render immersive videos. In the third embodiment, a game console 60 processes the content data. Game console 60 sends data and optionally control commands to the immersive video rendering device 10. The game console 60 is configured to process data representative of an immersive video and to send the processed data to the immersive video rendering device 10 for display. Processing may be done exclusively by the game console 60 or part of the processing may be done by the immersive video rendering device 10.

The game console 60 is connected to internet, either directly or through a gateway or network interface 50. The game console 60 obtains the data representative of the immersive video from the internet. In another embodiment, the game console 60 obtains the rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example. decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

Figure 7 schematically represents a fourth embodiment of a system configured to decode, process and render immersive videos the immersive video rendering device 70 is provided by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage may be on the smartphone 701 or on a local server accessible through a local area network for instance (not represented).

An embodiment of the immersive video rendering device 70 is described with reference to Figure 11. The immersive video rendering device 70 optionally includes at least one network interface 702 and housing 705 for the smartphone 701. The smartphone 701 includes functions of a smartphone and a display. The display of the smartphone is used as the immersive video rendering device 70 display. Optics 704, such as lenses, may be included for viewing the data on the smartphone display. The smartphone 701 is configured to process (for example, decode and prepare for display) data representative of an immersive video for example according to data received from the sensors 20 and from user input devices 30. Some of the measurements from sensors may be used to compute the pose of the device and to control the virtual camera. Sensors which may be used for pose estimation include, for instance, gyroscopes, accelerometers or compasses. More complex systems, for example a rig of cameras may also be used. In this case, the at least one processor performs image processing to estimate the pose of the device 10. Other measurements may be used to process the content according to environmental conditions or user reactions, for example. Sensors used for detecting environmental and users conditions include, for instance, microphones, light sensor or contact sensors. More complex systems may also be used such as, for example, a video camera tracking eyes of a user. In such case the at least one processor performs image processing to perform the measurement.

Figure 8 schematically represents a fifth embodiment of the first type of system in which the immersive video rendering device 80 includes functionalities for processing and displaying the data content. The system includes an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not represented) where the data representative of an immersive video are stored, said local storage may be provided on the rendering device 80 or on a local server accessible through a local area network for instance (not represented).

An embodiment of immersive video rendering device 80 is illustrated in Figure 12. The immersive video rendering device includes a display 801, for example an OLED or LCD type display, a touchpad (optional) 802, a camera (optional) 803, a memory 805 in connection with at least one processor 804 and at least one communication interface 806. Memory 805 includes parameters and code program instructions for the processor 804. Memory 805 may also include parameters received from the sensors 20 and user input devices 30. Memory 805may have a large enough capacity to store data representative of the immersive video content. Different types of memories may provide such a storage function and include one or more storage devices such as a SD card, a hard disk, a volatile or non-volatile memory...) Communication interface 806 enables the immersive video rendering device to communicate with internet network. The processor 804 processes data representative of the video to display images on display 801. The camera 803 captures images of the environment for an image processing step. Data are extracted from this step to control the immersive video rendering device.

Embodiments of a second type of system, for processing augmented reality, virtual reality, or augmented virtuality content are illustrated in figures 9 and 10. In these embodiments the system includes an immersive wall.

Figure 9A schematically represents an embodiment of the second type of system including a display 1000 - an immersive (projective) wall which receives data from a computer 4000. The computer 4000 may receive immersive video data from the internet. The computer 4000 can be connected to internet, either directly or through a gateway 5000 or network interface. In another embodiment, the immersive video data are obtained by the computer 4000 from a local storage (not represented) where data representative of an immersive video are stored, said local storage may be in the computer 4000 or in a local server accessible through a local area network for instance (not represented).

This system may also include one or more sensors 2000 and one or more user input devices 3000.The immersive wall 1000 may be an OLED or LCD type and may be equipped with one or more cameras. The immersive wall 1000 may process data received from the more or more sensors 2000. The data received from the sensor(s) 2000 may, for example, be related to lighting conditions, temperature, environment of the user, such as for instance, position of objects.

The immersive wall 1000 may also process data received from the one or more user input devices 3000. The user input device(s) 3000 may send data such as haptic signals in order to give feedback on the user emotions. Examples of user input devices 3000 include for example handheld devices such as smartphones, remote controls, and devices with gyroscope functions.

Data may also be transmitted from sensor(s) 2000 and user input device(s) 3000 data to the computer 4000. The computer 4000 may process the video data (e.g. decoding them and preparing them for display) according to the data received from these sensors/user input devices. The sensors signals may be received through a communication interface of the immersive wall. This communication interface may be of Bluetooth type, of WIFI type or any other type of connection, preferentially wireless but may also be a wired connection.

Computer 4000 sends the processed data and, optionally, control commands to the immersive wall 1000. The computer 4000 is configured to process the data, for example prepare the data for display by the immersive wall 1000. Processing may be done exclusively by the computer 4000 or part of the processing may be done by the computer 4000 and part by the immersive wall 1000.

Figure 9B schematically represents another embodiment of the second type of system. The system includes an immersive (projective) wall 6000 which is configured to process (for example decode and prepare data for display) and display the video content and further includes one or more sensors 2000, and one or more user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

This system may also include one or more sensors 2000 and one or more user input devices 3000.The immersive wall 6000 may be of OLED or LCD type and be equipped with one or more cameras. The immersive wall 6000 may process data received from the sensor(s) 2000 (or the plurality of sensors 2000). The data received from the sensor(s) 2000 may for example be related to lighting conditions, temperature, environment of the user, such as position of objects.

The immersive wall 6000 may also process data received from the user input device(s) 3000. The user input device(s) 3000 send data such as haptic signals in order to give feedback on the user emotions. Examples of user input devices 3000 include for example handheld devices such as smartphones, remote controls, and devices with gyroscope functions.

The immersive wall 6000 may process the video data (e.g. decoding them and preparing them for display) according to the data received from these sensor(s)/user input device(s). The sensor signals may be received through a communication interface of the immersive wall. This communication interface may include a Bluetooth type, a WIFI type or any other type of wireless connection, or any type of wired connection. The immersive wall 6000 may include at least one communication interface to communicate with the sensor(s) and with the internet.

Figure 10 illustrates another embodiment in which an immersive wall is used for gaming. One or more gaming consoles 7000 are connected, for example through a wireless interface to the immersive wall 6000. The immersive wall 6000 receives immersive video data from the internet through a gateway 5000 or directly from internet. In an alternative embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

Gaming console 7000 sends instructions and user input parameters to the immersive wall 6000. Immersive wall 6000 processes the immersive video content, for example, according to input data received from sensor(s) 2000 and user input device(s) 3000 and gaming console(s) 7000 in order to prepare the content for display. The immersive wall 6000 may also include internal memory to store the content to be displayed.

Virtual Reality videos are basically 360 videos that enables the end user to choose his favorite angle to view content. When a 360 video is viewed in Head Mounted Displays, the end user gets an immersive experience. MPEG (Moving Picture Transport Group - standard for digital video and audio compression) transport stream (TS) is a standard container format for transmission and storage of audio, video, and Program and System Information Protocol (PSIP) data. It is used in broadcast systems such as digital video broadcasting (DVB), ATSC (Advanced Television System Committee standards), and Internet Protocol Television (IPTV). Program-specific information (PSI) is metadata about a program (channel) and part of an MPEG transport stream. Cable and Satellite (STB) receive linear subscription channels in MPEG-TS container. The proposal is to update the PSI by adding a new 360_video descriptor to the video elementary stream of the VR video PID (proportional-integral-derivative) controller (also referenced as ISO-13818/1 in one embodiment). The STB shall understand whether the video is a VR video and use the data in the 360_video descriptor to play the video in the native VR player. The native VR player application in STB uses the data from the 360_video descriptor to use the correct projection type and enable the end user to pan the video using remote control. The addition of the native VR player to STB enables end user to view VR content using TV as display device even by users who do not possess head mounted displays or devices such as the one discussed in Figure 1.

As discussed, the system proposed here addresses the challenges mentioned above by making use of other available displays. In one embodiment, as shown in Figure 13, a TV 1300 is used as a as display device that is connected to a set-top box 1310 that can be used the VR player. An existing remote control 1320, such as the one used for the set-top boxe(s) can be used to pan and view the desired viewing angle of the VR content.

In one embodiment, the end user can choose the favourite viewing angle by using existing Left/Right/Up/Down keys in the set-top remote. For each key press, the viewing angle of the VR video shall be rotated accordingly in the corresponding direction. For Left/Right key press the rotation shall be around the y-axis, azimuth. For Up/Down key press, the rotation shall be around the x-axis, elevation.

Figure 14 provides an example of a 360 degree video descriptor. The different functions are provided in the chart 1400. The following explanations of some of the functions in the chart 1400 which are provided to ease understanding:
Semantic definitions of fields in video stream descriptor:
descriptor_tag - Set to 0x37 to identify 360_video descriptor;
descriptor_length - The descriptor_length is an 8-bit field specifying the number of bytes of the descriptor immediately following descriptor_length field;
360_video_flag - The 1-bit flag when set to '1' indicates that the video elementary stream is a 360 video;
projection_type - Indicates the projection_type of 360 video projection_type field values :

| **Value** | **Description** |
|---|---|
| 0 | Spherical (Equi-rectangular) |
| 1 | Cylindrical |
| 2 | Cubic |
| 3 | Plane |

stereo_mode - Indicates the stereo layout mode (stereo_mode field values):

| **Value** | **Description** |
|---|---|
| 0 | Mono |
| 1 | Stereo Left-Right |
| 2 | Stereo Top-Down |

- Heading -: Heading angle of the initial view in degrees
- Pitch -: Pitch angle of the initial view in degrees
- Roll -: Roll angle of the initial view in degrees
- full_width -: Width of the video frame in pixels
- full_height -: Height of the video frame in pixels
- cropped_width -: Width of the video frame to display
- cropped_height -: Height of the video frame to display

Even though 360 degree videos capture all the degrees of the scene, there is no means to indicate the director's preferred viewing angle. This director's preferred viewing angle shall be added in the meta data of the content, for ex a new descriptor in the PMT for MPEG-TS container.

In one embodiment, two new functions can be provided:
- directors' azimuth -: Director's preferred azimuth viewing angle
- director's elevation -: Director's preferred elevation viewing angle

With the addition of director's preferred viewing angle in the meta-data, a new user interface shall be added to the remote-control, say representing a 'chair to indicate that on pressing it the view will be taken to director's viewing angle.

Referring back to Figure 13 and taking it in conjunction with descriptors provided, in one embodiment, the 'Last' or 'Back' button equivalent interface on any of the existing remote control shall be used to return back to the last user navigated viewing angle. A sample addition of the director's view interface with a 'chair' button (to depict director's view) is shown in an example as provided in Figure 15.

In Figure 15, example of a remote is provided at 1520 with the understanding that this is only for ease of understanding and in alternate embodiments, other user interfaces and remotes can also be provided. In this embodiment, as shown in Figure 15, when the user presses 'chair' button sown by numerals 1550 sin the remote to watch the director's preferred viewing angle, instead of abruptly changing the viewing angle in the next frame, the set-top box shall animate from the current viewing angle to the director's viewing angle.

In one embodiment, this provides a smooth and short path to reach the director's viewing angle to give a gracious and immersive experience to the end user. Viewing angle for VR videos are described using azimuth [say 'x'] and elevation [say 'y'] angles. Angles range from 0 to 359 degrees for both azimuth and elevation. The following method shall be applied on pressing the 'chair' button to switch to the director's viewing angle.

In one embodiment as shown in Figure 16, at first the last user selected viewing angle is saved at 1600. Determination of the direction of rotation is decided based on the current viewing angle and the director's viewing angle and the direction chosen would result in the shortest path of rotation to reach the director's viewing angle as shown at 1610. In one embodiment, this information is stored, such as in the x_offset and the y_offset for both azimuth and elevation angles. Then, for each rendered frame, the angle rotation is applied in increments of 1 degree until the director's view is reached as shown (the x portion is shown at steps 1620, 1630 and 1640; and the y portion is shown at 1650, 1660 and 1670). In this embodiment, this provides a short and animated method to change to the director's viewing angle. This animated viewing angle change will provide a smooth and immersive experience to the end user.

As shown in Figure 17, the same method can be used when the user presses 'Last'/'Back' button to go back to the last user selected viewing angle, by using last_x and last_y as the target viewing angles (except that the first step of saving the last user selected viewing angle is not required). Again, the last user selected viewing angle is saved at 1700. Determination of the direction of rotation is decided based on the current viewing angle and the director's viewing angle and the direction chosen would result in the shortest path of rotation to reach the director's viewing angle as shown at 1710. The information is stored as in the x_offset and the y_offset shown at 1720 to 740 and the frame is rendered at 1750 and continues being rendered further for frames for the angles x and y as shown at 1760. provide a smooth and immersive experience to the end user.

This embodiment provides for adaptability of currently VR/AR content to be immersivity experienced by many users at the same time. This allows for a more sociable VR/AR immersive experience

Figure 18 is a flow chart illustration according to one embodiment. In Figure 18 at step 1810 a video stream is received including its associated metadata. In step 1820, an optimal viewing angle is calculated, via a processor, by analyzing the video stream content and associated metadata. In one embodiment, as shown in step 1825, this may include using a panoramic viewing descriptor (that has 0 to 360 degrees capability) to include an optimal viewing angle. This may include a previously calculated angle, a preferred user preference (see step 1847) based on a user selection or previous user habits, or alternatively one recommended by a media outlet, a director etc. In step 1827, in one embodiment, the video stream may include a plurality of mapped frames. In this case, the processor may render each of the mapped frames of the video stream according to the optimal angle of viewing.

In step 1830, the processor manipulates the video stream so it can be displayed according to said optimal viewing angle. In step 1840, in one embodiment, the video stream will be then displayed based on the optimal angle of viewing. In one embodiment, as provided in step 1845, a favorite viewing angle is determined by analyzing previous user viewing habits associated with the display device. As discussed above, the favorite viewing angle can be established in a variety of ways and may be substituted as the optimal viewing angle.

While some embodiments have been described, it will be understood that those skilled in the art, both now and in the future, may make various improvements and enhancements which fall within the scope of the claims which follow. These claims should be construed to maintain the proper protection for the invention first described.

## Claims

1. A method comprising:
receiving (1810) a video stream including associated metadata;
calculating (1820) via a processor an optimal viewing angle by analyzing said video stream content and associated metadata;
manipulating (1830) via a processor said video stream so that it can be displayed according to said optimal viewing angle.

2. A system comprising:
a video processing unit (1310) for receiving (1810) a video stream and its associated metadata;
said video processing unit coupled to a processor configured for calculating (1812) an optimal viewing angle by analyzing video stream content and said associated metadata;
said processor also configured for manipulating (1830) said video stream so that said video stream can be displayed (1840) based on said optimal viewing angle.

3. The method of claim 1 or system of claim 2, wherein calculating said optimal viewing angle further comprises: determining if said video stream includes a viewing descriptor and calculating said optimal viewing angle based on said viewing descriptor when said descriptor is present.

4. The method of claim 3 or system of claim 3, wherein said viewing descriptor is a panoramic viewing descriptor.

5. The method of claim 4 or system of claim 4, wherein said panoramic viewing descriptor includes angles from 0 to 360 degrees of viewing.

6. The method of claim 4 or system of claim 4, wherein said video stream includes a plurality of mapped frames further comprising: rendering via said processor each of the mapped frames of the video stream according to said optimal angle of viewing.

7. The method of claim 6 or system of claim 6, wherein said mapped frames are decoded to determine if any of the frames include a panoramic video descriptor.

8. The method for claim 1 or system of claim 2, further comprising displaying said video stream based on said optimal angle of viewing.

9. The method of claim 1 or system of claim 2, wherein said video stream is displayed on a display device and a favorite viewing angle is determined by analyzing previous user viewing habits associated with said display device.

10. The method of 9 or system of claim 9, wherein said favorite user habits are substituted as optimal viewing angle.

11. The method of 9 or system of claim 9, wherein said favorite user habits are substituted as said optimal viewing angle when there is no viewing descriptor present.

12. The method of 9 or system of claim 9, wherein said favorite user habits are analyzed when there is a viewing descriptor present so as to determine if said user favorite viewing angle can be substituted as said optimal viewing angle.

13. The method of claim 1 or system of claim 2, further comprising a user interface coupled to said processor and wherein said user interface has an associate memory for storing said user preferred viewing angle.

14. The method of claim 14 or system of claim 14, wherein said user interface also records any optimal viewing angles and automatically retrieves either said user preferred viewing angle or a stored optimal viewing angle established previously.

15. A non-transitory computer-readable medium storing computer-executable instructions executable to perform the method of any one of claims 1 and 3 to 14.
